# EUROPEAN PATENT SPECIFICATION

(11) **EP 3 150 430 B1**
(45) Date of publication and mention of the grant of the patent: **27.03.2019**
(21) Application number: 16189311.0
(22) Date of filing: 16.09.2016
(51) Int. Cl.: B60Q 1/00, B60Q 1/26, F21S 43/20, F21S 43/50, B62J 6/04

(54) **VEHICLE-USE REAR COMBINATION LAMP AND VEHICLE**
HECKKOMBINATIONSLAMPE ZUR VERWENDUNG IN EINEM FAHRZEUG UND FAHRZEUG
FEU ARRIÈRE COMBINÉ POUR VÉHICULE ET VÉHICULE

(30) Priority: 30.09.2015 JP 2015193824
(43) Date of publication of application: 05.04.2017
(73) Proprietor: Honda Motor Co., Ltd., Minato-ku Tokyo 107-8556 (JP)
(72) Inventor: SOETA, Ryuhei, Wako-shi, Saitama 351-0193 (JP); TAKENAKA, Nobuyuki, Wako-shi, Saitama 351-0193 (JP); MORI, Kazuhiko, Wako-shi, Saitama 351-0193 (JP); KATAOKA, Keiko, Wako-shi, Saitama 351-0193 (JP); KURIKI, Daisuke, Wako-shi, Saitama 351-0193 (JP); ASHIHARA, Eiji, Minato-ku, Tokyo 105-6024 (JP)
(74) Representative: Piésold, Alexander James

(56) References cited:
- EP-A1- 2 644 486
- DE-A1-102014 203 297
- FR-A1- 3 007 503
- FR-A1- 3 014 787
- US-A- 5 562 338

## Description

The present invention relates to a vehicle-use rear combination lamp and a vehicle where a tail lamp portion and a pair of blinker lamp portions disposed on left and right sides of the tail lamp portion are mounted on a common housing.

A vehicle-use rear combination lamp of this type includes, for example, an inner lens which covers a tail lamp portion, and an outer lens which covers a pair of blinker lamp portions and the inner lens integrally (see JP-A-2015-44563, for example).

In the vehicle-use rear combination lamp described above, there has been a demand for ensuring the clear distinction between the visibility of tail lamp light from the tail lamp portion and the visibility of blinker lamp lights from the respective blinker lamp portions while integrally forming the vehicle-use rear combination lamp in a compact shape.

However, when the pair of blinker lamp portions are disposed close to the left and right sides of the tail lamp portion, there is a concern that the clear distinction between the visibility of the tail lamp light and visibility of the respective blinker lamp lights cannot be ensured.

A vehicle-use rear combination lamp in accordance with the precharacterising part of claim 1 is known from DE 10 2014 203297. A vehicle-use lamp is known from FR 3007503.

It is an object of at least the preferred embodiments of the present invention to provide a vehicle-use rear combination lamp and a vehicle where the clear distinction can be ensured between the visibility of tail lamp light and the visibility of respective blinker lamp lights while integrally forming the vehicle-use rear combination lamp in a compact shape.

A vehicle-use rear combination lamp according to the present invention has the following technical features.

### First technical feature:

In a vehicle-use rear combination lamp which includes: a tail lamp portion; a pair of blinker lamp portions disposed on both left and right sides of the tail lamp portion; a common housing on which the tail lamp portion and the pair of blinker lamp portions are mounted; an inner lens which covers the tail lamp portion; and an outer lens which integrally covers the inner lens and the pair of blinker lamp portions; wherein the inner lens (50) includes a tail lens portion (100, 104) to which tail lamp light from the tail lamp portion (41) is irradiated; wherein a light transmission suppressing portion which suppresses transmission of light is provided, characterised in that the light transmission suppressing portion which suppresses transmission of light is formed on a portion of the inner lens, the light transmission suppressing portion includes a pair of side light-transmission suppressing portions positioned on both left and right side portions of the inner lens respectively to ensure the clear distinction between the visibility of tail lamp light from the tail lamp portion and the visibility of blinker lamps lights from the respective blinker lamp portions, wherein the respective side light-transmission suppressing portions are positioned vehicle rearward of the tail lens portion.

### Second technical feature

The respective side light-transmission suppressing portions may extend in a vertical direction of the inner lens.

### Third technical feature

Upper end portions of the respective side light-transmission suppressing portions may be positioned above the respective blinker lamp portions, and lower end portions of the respective side light-transmission suppressing portions may be positioned below the respective blinker lamp portions.

### Fourth technical feature

A pair of blinker reflectors which reflects blinker lamp light from the respective blinker lamp portions may be provided to the housing, and the respective side light-transmission suppressing portions may be disposed between the tail lens portion and the respective blinker reflectors.

### Fifth technical feature

The light transmission suppressing portion may include a pair of inner light-transmission suppressing portions which extends inward in a left-and-right direction from portions of the respective side light-transmission suppressing portions disposed close to the blinker lamp portions in the left-and-right direction.

### Sixth technical feature

The inner lens may include a pair of side lens portions which is disposed on both left and right sides of the tail lens portion and projects vehicle rearward from the tail lens portion, and the side light-transmission suppressing portions may be provided to the respective side lens portions (90L, 90R).

A vehicle according to the present invention has the following technical feature.

### Seventh technical feature

The vehicle is equipped with the vehicle-use rear combination lamp having any one of the above-mentioned first to eighth technical features

According to the first technical feature of the present invention, the tail lamp portion and the pair of blinker lamp portions are mounted on the common housing and hence, the vehicle-use rear combination lamp can be provided as an integral body and in a compact shape. Further, the side light-transmission suppressing portions are formed on both left and right sides of the inner lens and hence, the clear distinction can be ensured between the visibility of the tail lamp light and the visibility of the respective blinker lamp lights. Further still, the respective side light-transmission suppressing portions are positioned behind the tail lens portion in the longitudinal direction of the vehicle. Accordingly, the clear distinction can be ensured further effectively between the visibility of the tail lamp light and the visibility of the respective blinker lamp lights.

According to the second technical feature of the present invention, the respective side light-transmission suppressing portions extend along the vertical direction of the inner lens and hence, the clear distinction can be ensured effectively between the visibility of the tail lamp light and the visibility of the respective blinker lamp lights.

According to the third technical feature of the present invention, the upper end portions of the respective side light-transmission suppressing portions are positioned above the respective blinker lamp portions, and the lower end portions of the respective side light-transmission suppressing portions are positioned below the respective blinker lamp portions. Accordingly, the clear distinction can be ensured more effectively between the visibility of the tail lamp light and the visibility of the respective blinker lamp lights.

According to the fourth technical feature of the present invention, the side light-transmission suppressing portions are disposed between the tail lens portions and the respective blinker reflectors. Accordingly, the clear distinction can be ensured further effectively between the visibility of the tail lamp light and the visibility of the respective blinker lamp lights.

According to the fifth technical feature of the present invention, the light transmission suppressing portion includes the inner light-transmission suppressing portions and hence, the clear distinction can be ensured still further effectively between the visibility of the tail lamp light and the visibility of the respective blinker lamp lights.

According to the sixth technical feature of the present invention, the pair of side lens portions provided with the side light-transmission suppressing portions are disposed on both left and right sides of the tail lens portion and hence, design property of the vehicle-use rear combination lamp can be enhanced.

According to the seventh technical feature of the present invention, it is possible to provide the vehicle which can acquire substantially the same manner of operation and advantageous effects as the vehicle-use rear combination lamp having the above-mentioned first to sixth technical features.

An embodiment of the invention will now be described by way of example and with reference to the accompanying drawings.

Fig. 1 is a left side view of a vehicle equipped with a rear combination lamp according to one embodiment of the present invention.
Fig. 2 is a view showing the rear combination lamp in Fig. 1 as viewed from a rear of the vehicle.
Fig. 3 is a longitudinal cross-sectional view of the rear combination lamp taken along a line III-III in Fig. 2.
Fig. 4 is a view showing the rear combination lamp in Fig. 2 in a state where an outer lens and an inner lens are removed from the rear combination lamp.
Fig. 5 is a view showing the rear combination lamp in Fig. 2 in a state where the outer lens is removed from the rear combination lamp.
Fig. 6 is a plan view of the rear combination lamp in Fig. 2 with the outer lens indicated by an imaginary line.
Fig. 7 is a view of the rear combination lamp as viewed in a direction indicated by an arrow A in a state where the outer lens is omitted from the rear combination lamp shown in Fig. 3.

Hereinafter, a vehicle-use rear combination lamp according to the present invention is described by exemplifying a preferred embodiment in association with a vehicle equipped with such a vehicle-use rear combination lamp with reference to the attached drawings.

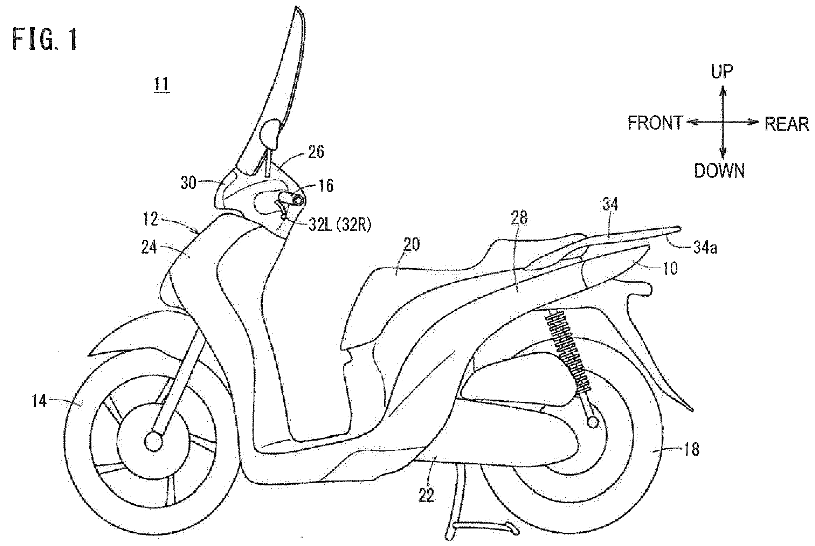

In this embodiment, the description is made by exemplifying a scooter-type motorcycle as a vehicle. However, the vehicle according to the present invention is not limited to the motorcycle, and the vehicle may be a motorcycle, a three-wheeled vehicle or the like of an on-road type or an off-road type. Further, unless otherwise specified, the directions "up", "down", "front", "rear" are described in accordance with the directions indicated by arrows shown in Fig. 1, and the left-and-right direction is described with reference to a rider seated on the motorcycle.

As shown in Fig. 1, a motorcycle 11 includes: a vehicle body cover 12 which covers a vehicle body frame, a front wheel 14 to be steered; a handle bar 16 for steering the front wheel 14; a rear wheel 18 which is a drive wheel; a seat 20 on which a rider sits; and a swing unit 22.

The vehicle body cover 12 includes: a front cover 24 which covers a front portion of the vehicle body frame; a head cover 26 which is positioned above the front cover 24; and a rear cover 28 which covers a rear portion of the vehicle body frame. A head lamp 30 which emits light toward a front side (vehicle forward) and a pair of left and right brake levers 32L, 32R are mounted on the head cover 26.

A carrier 34 on which a luggage or the like is placed and a rear combination lamp (vehicle-use rear combination lamp) 10 which is positioned below the carrier 34 are mounted on a rear end portion of the rear cover 28. A lower surface 34a of the carrier 34 is inclined upward toward a rear side (vehicle rearward).

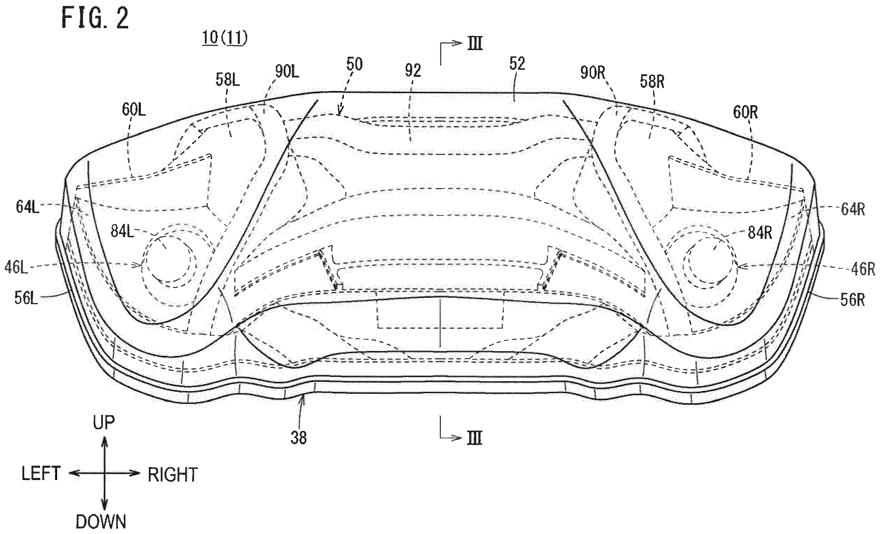

As shown in Fig. 2 to Fig. 6, the rear combination lamp 10 includes: a housing 38; a stop lamp portion (first lamp portion) 40 disposed in the housing 38; a tail lamp portion 41 disposed above the stop lamp portion 40; a pair of blinker lamp portions 46L, 46R disposed on both left and right sides of the tail lamp portion 41; a drive portion 48; an inner lens 50; and an outer lens 52.

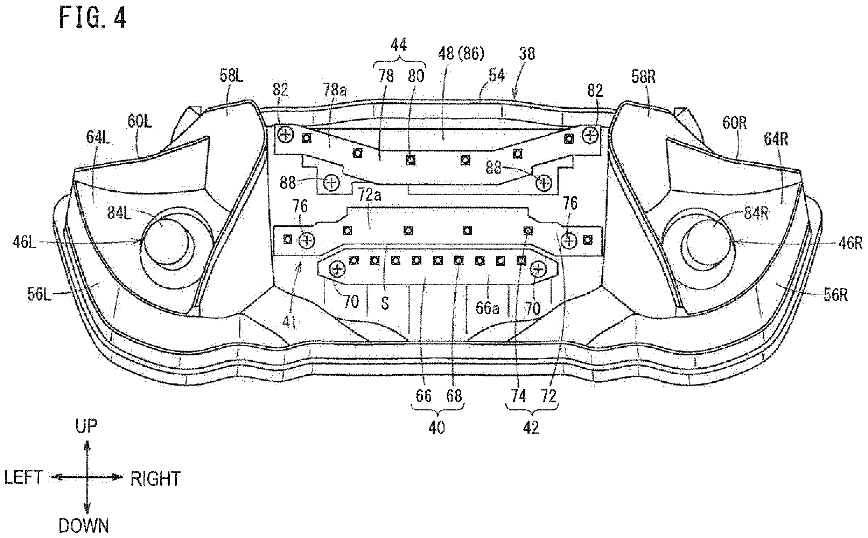

As shown in Fig. 4, the housing 38 is formed as an integral body using a resin material, and has a predetermined width size in a vertical direction, and extends in the left-and-right direction. The housing 38 includes: a center support portion 54; a pair of side support portions 56L, 56R disposed on both left and right sides of the center support portion 54; a pair of partition walls 58L, 58R which define the center support portion 54 and the respective side support portions 56L, 56R; and a pair of upper wall portions 60L, 60R which extend vehicle rearward from upper portions of the respective side support portions 56L, 56R.

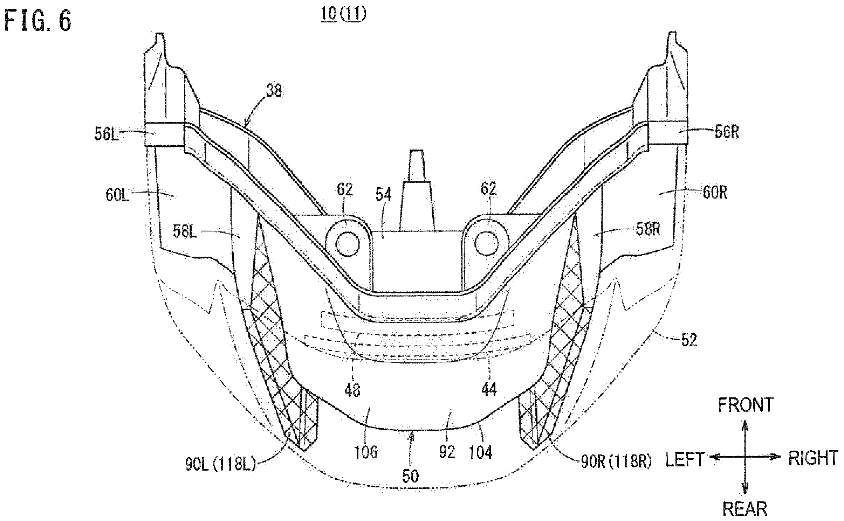

The center support portion 54 is provided for supporting the stop lamp portion 40, the tail lamp portion 41 and the drive portion 48, and is formed into an approximately V shape as viewed in a plan view (see Fig. 6). A plurality of mounting portions 62 for fixing the rear combination lamp 10 to the rear cover 28 by screw members not shown in the drawings are integrally formed on the center support portion 54. The plurality of mounting portions 62 may be formed on desired portions (portions other than the center support portion 54) of the housing 38.

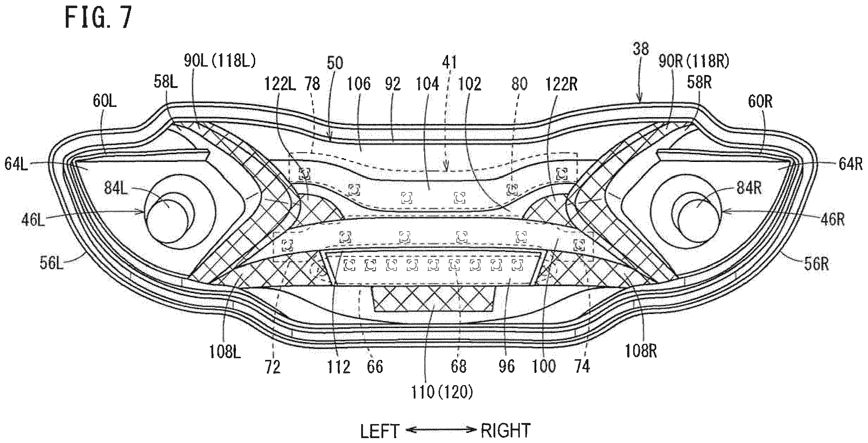

The side support portion 56L supports the blinker lamp portion 46L, and the side support portion 56R supports the blinker lamp portion 46R. The partition wall 58L projects rearward from a boundary portion between the center support portion 54 and the side support portion 56L, and extends along the vertical direction of the side support portion 56L. The partition wall 58L is formed such that a projection amount of the partition wall 58L is gradually increased toward a center portion of the partition wall 58L in the vertical direction from both end portions of the partition wall 58L in the vertical direction, and extends toward a right side (an inner side in the left-and-right direction) (see Fig. 4 and Fig. 7). Since the partition wall 58R has substantially the same configuration as the partition wall 58L, the detailed explanation of the partition wall 58R is omitted.

The upper wall portion 60L extends to the partition wall 58L from a left end portion of the side support portion 56L. That is, the upper wall portion 60L covers the blinker lamp portion 46L from above (see Fig. 6). Since the upper wall portion 60R has substantially the same configuration as the upper wall portion 60L, the detailed explanation of the upper wall portion 60R is omitted.

In such a housing 38, a reflection material is applied by coating to concave curved surfaces of the respective side support portions 56L, 56R which are directed rearward, surfaces of the respective partition walls 58L, 58R which are directed toward the outside in the left-and-right direction, and surfaces of the respective upper wall portions 60L, 60R which are directed downward. A pair of blinker reflectors 64L, 64R is formed in the housing 38 by such a reflection material.

On the other hand, the blinker reflector 64L may be formed by fixing a sheet member or a cover member capable of reflecting light to the side support portion 56L, the partition wall 58L and the upper wall portion 60L. Further, the blinker reflector 64L may be formed by molding the side support portion 56L, the partition wall 58L and the upper wall portion 60L using a resin material having optical reflectivity. A method of forming the blinker reflector 64R is substantially equal to the above-mentioned method of forming the blinker reflector 64L.

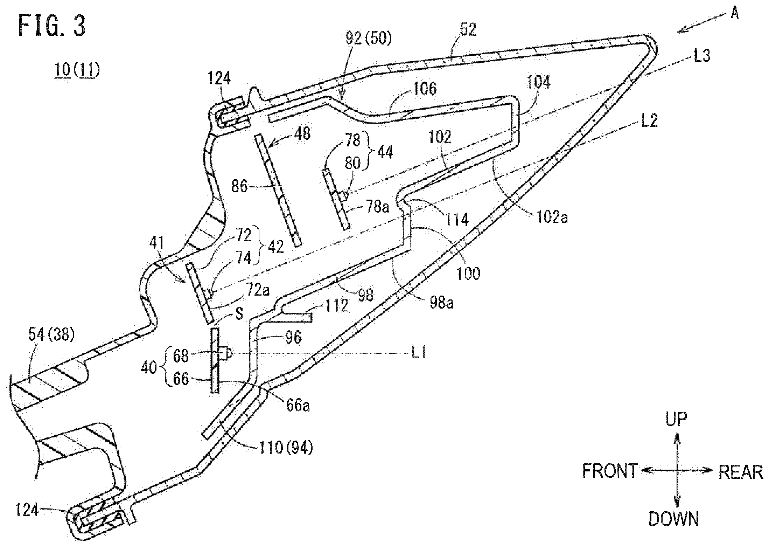

As shown in Fig. 3, and Fig. 4, the stop lamp portion 40 includes: a stop lamp printed circuit board (first printed circuit board) 66 which extends in the left-and-right direction; and a plurality of stop lamp light sources (first light source) 68 mounted on the stop lamp printed circuit board 66.

The stop lamp printed circuit board 66 is fixed to the approximately center of a lower portion of the center support portion 54 in the left-and-right direction by a plurality of (two in the example shown in Fig. 4) screw members 70. A mounting surface 66a of the stop lamp printed circuit board 66 on which the plurality of stop lamp light sources 68 are disposed face vehicle rearward in a state where the mounting surface 66a is parallel to a vertical plane.

Each stop lamp light source 68 is configured to turn on (emit stop lamp light) when a braking operation is performed (when the brake lever 32L, 32R is operated), and is formed of a light emitting diode. The respective stop lamp light sources 68 are mounted on the stop lamp printed circuit board 66 such that an optical axis L1 of stop lamp light (first light) is directed in an approximately horizontal direction. The plurality of stop lamp light sources 68 are arranged in a row at equal intervals along the left-and-right direction. On the other hand, the plurality of stop lamp light sources 68 may be arranged in two or more rows in the vertical direction.

The tail lamp portion 41 includes a first tail lamp portion 42 and a second tail lamp portion 44. The first tail lamp portion 42 includes: a first tail lamp printed circuit board (second printed circuit board) 72; and a first tail lamp light source (second light source) 74 disposed at plural positions on the first tail lamp printed circuit board 72.

The first tail lamp printed circuit board 72 is fixed to the center support portion 54 by a plurality of (two in the example shown in Fig. 4) screw members 76 in a state where the first tail lamp printed circuit board 72 is positioned above the stop lamp printed circuit board 66. That is, the first tail lamp printed circuit board 72 is provided as a separate body from the stop lamp printed circuit board 66, and a gap S is formed between the first tail lamp printed circuit board 72 and the stop lamp printed circuit board 66. The first tail lamp printed circuit board 72 extends longer than the stop lamp printed circuit board 66 in the left-and-right direction, and both left and right end portions of the first tail lamp printed circuit board 72 extend downward. A mounting surface 72a of the first tail lamp printed circuit board 72 on which the plurality of first tail lamp light sources 74 are disposed is directed rearward and upward.

Each first tail lamp light source 74 is formed of a light emitting diode. The respective first tail lamp light sources 74 are disposed on the first tail lamp printed circuit board 72 such that an optical axis L2 of the first tail lamp light (second light) is directed rearward and upward. That is, the optical axis L2 of the first tail lamp light is inclined upward toward the rear with respect to the optical axis L1 of the stop lamp light.

Among the plurality of first tail lamp light sources 74, respective first tail lamp light sources 74 positioned on both left and right ends are arranged below the first tail lamp light source 74 positioned at a middle in the left-and-right direction.

With such a configuration, it is possible to efficiently increase an area to which the first tail lamp light is distributed without increasing a size of the vehicle-use rear combination lamp 10 in the left-and-right direction. Accordingly, the visibility of the first tail lamp light can be increased.

The second tail lamp portion 44 includes: a second tail lamp printed circuit board (third printed circuit board) 78 positioned behind and above the first tail lamp printed circuit board 72; and a plurality of second tail lamp light sources (third light source) 80 disposed on the second tail lamp printed circuit board 78.

The second tail lamp printed circuit board 78 is fixed to an upper portion of the center support portion 54 by a plurality of (two in the example shown in Fig. 4) screw members 82 in a state where the second tail lamp printed circuit board 78 is positioned behind the first tail lamp printed circuit board 72. The second tail lamp printed circuit board 78 extends longer than the stop lamp printed circuit board 66 in the left-and-right direction, and both left and right end portions of the second tail lamp printed circuit board 78 extend upward. A mounting surface 78a of the second tail lamp printed circuit board 78 on which the plurality of second tail lamp light sources 80 are disposed is substantially parallel to the mounting surface 72a of the first tail lamp printed circuit board 72, and is directed rearward and upward.

Each second tail lamp light source 80 is formed of a light emitting diode. The respective second tail lamp light sources 80 are disposed on the second tail lamp printed circuit board 78 such that an optical axis L3 of the second tail lamp light (third light) becomes substantially parallel to the optical axis L2 of the first tail lamp light. That is, the optical axis L3 of the second tail lamp light is inclined upward toward the rear with respect to the optical axis L1 of the stop lamp light.

Among the plurality of second tail lamp light sources 80, respective second tail lamp light sources 80 positioned on both left and right ends are arranged above the second tail lamp light source 80 positioned at a middle in the left-and-right direction.

With such a configuration, it is possible to efficiently increase an area to which the second tail lamp light is distributed without increasing a size of the vehicle-use rear combination lamp 10 in the left-and-right direction. Accordingly, the visibility of the second tail lamp light can be increased.

The blinker lamp portion 46L includes a blinker lamp light source 84L, and the blinker lamp portion 46R includes a blinker lamp light source 84R. Each blinker lamp light source 84L, 84R is formed of a bulb and flickers (emitting blinker lamp light) when a direction indication switch not shown in the drawing is operated. Each blinker lamp light source 84L, 84R is mounted on each side support portion 56L, 56R such that each blinker lamp light source 84L, 84R is disposed adjacently to a center portion of each partition wall 58L, 58R in the vertical direction outside in the left and right direction.

The blinker lamp light emitted from the blinker lamp light source 84L is reflected on the blinker reflector 64L and is irradiated toward a rear side, while the blinker lamp light emitted from the blinker lamp light source 84R is reflected on the blinker reflector 64R and is irradiated toward a rear side. The blinker lamp light sources 84L, 84R are not limited to bulbs, and may be formed of a plurality of light emitting diodes.

The drive portion 48 includes a drive printed circuit board 86 on which electronic parts not shown in the drawing for performing a drive control of the stop lamp light sources 68, the first tail lamp light sources 74, the second tail lamp light sources 80 and the respective blinker lamp light sources 84L, 84R are mounted. The drive printed circuit board 86 is fixed to the center support portion 54 by a plurality of (two in the example shown in Fig. 4) screw members 88 in a state where the drive printed circuit board 86 is positioned between the first tail lamp printed circuit board 72 and the second tail lamp printed circuit board 78.

As shown in Fig. 3, Fig. 5 to Fig. 7, the inner lens 50 is a red transparent cover member which integrally covers the stop lamp portion 40, the tail lamp portion 41 and the drive printed circuit board 86 from behind. The inner lens 50 includes: a pair of side lens portions 90L, 90R mounted on the respective partition walls 58L, 58R; and a center lens portion 92 which connects these side lens portions 90L, 90R to each other.

The side lens portion 90L is formed such that the side lens portion 90L can engage with the partition wall 58L by fitting engagement, and is formed over an approximately entire length of the partition wall 58L in the vertical direction. To be more specific, the side lens portion 90L is brought into contact with a surface of the partition wall 58L directed toward a right side, a distal end surface of the partition wall 58L, and a surface of a distal end portion of the partition wall 58L directed toward a left side. With such a configuration, the inner lens 50 is fixed to the housing 38. Since the side lens portion 90R has substantially the same configuration as the above-mentioned side lens portion 90L, the detailed explanation of the side lens portion 90R is omitted.

The center lens portion 92 includes: a lower cover portion 94; a stop lens portion (first lens portion) 96 formed on the lower cover portion 94; a first inclined portion 98 extending rearward and upward from the stop lens portion 96; a first tail lens portion (second lens portion) 100 extending upward from a rear end portion of the first inclined portion 98; a second inclined portion 102 extending rearward and upward from an upper end portion of the first tail lens portion 100; a second tail lens portion (third lens portion) 104 extending upward from a rear end portion of the second inclined portion 102; and an upper cover portion 106 extending frontward from an upper end portion of the second tail lens portion 104.

The lower cover portion 94 includes: a pair of side lower cover portions 108L, 108R positioned at both side portions of a lower portion of the center lens portion 92 in the left-and-right direction; and a center lower cover portion 110 disposed below the stop lamp printed circuit board 66. The respective side lower cover portions 108L, 108R and the center lower cover portion 110 are continuously formed to each other, and extend upward toward the rear. The stop lens portion 96 is contiguously formed with a rear end portion of the center lower cover portion 110.

The stop lens portion 96 is positioned at a center portion of the lower portion of the center lens portion 92 in the left-and-right direction. That is, the stop lens portion 96 is disposed such that the stop lens portion 96 is sandwiched by the pair of side lower cover portions 108L, 108R in the left-and-right direction. The stop lens portion 96 is positioned above the optical axis L1 of the stop lamp light, and is brightened by being irradiated with the stop lamp light. A distance from each stop lamp light source 68 to the stop lens portion 96 is set shorter than a distance from each first tail lamp light source 74 to the first tail lens portion 100.

The first inclined portion 98, the first tail lens portion 100, the second inclined portion 102, and the second tail lens portion 104 respectively extend in the left-and-right direction so as to connect the pair of side lens portions 90L, 90R to each other. The first inclined portion 98 (a lower surface 98a of the first inclined portion 98) extends substantially parallel to the optical axis L2 of the first tail lamp light. With such a configuration, the stop lens portion 96 can be easily visually recognized from behind and above. A rear end of the first inclined portion 98 is positioned behind the second tail lamp light source 80. A front end of the first inclined portion 98 is positioned behind the first tail lamp light source 74. Accordingly, it is possible to effectively illuminate the first inclined portion 98 even when an LED having higher directivity than a bulb is used as the first tail lamp light source 74.

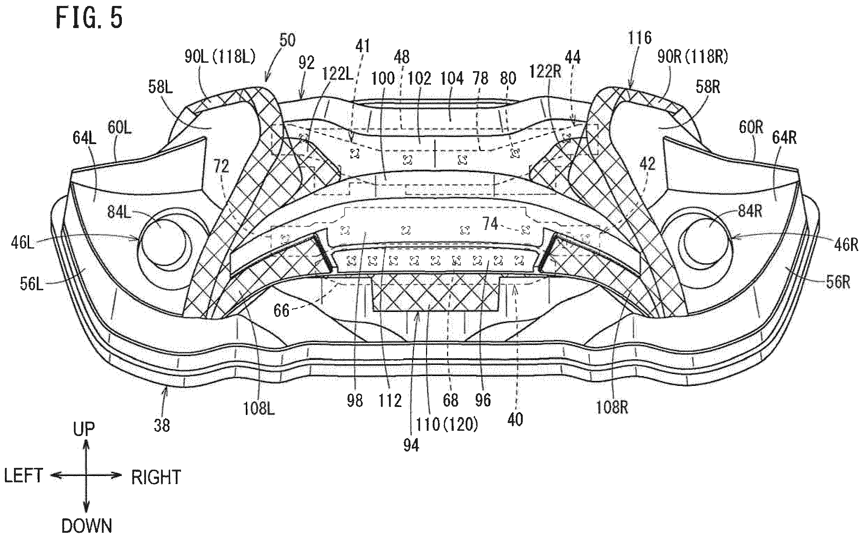

A projecting portion 112 which projects toward the rear is formed on a boundary portion between the stop lens portion 96 and the first inclined portion 98. The projecting portion 112 is positioned between the stop lamp printed circuit board 66 and the first tail lamp printed circuit board 72 as viewed from a rear side in the longitudinal direction of the vehicle (see Fig. 5). With such a configuration, a boundary portion between the stop lamp printed circuit board 66 and the first tail lamp printed circuit board 72 can be minimally visually recognized from the rear of the vehicle and hence, and thus design property of the rear combination lamp 10 can be enhanced.

The projecting portion 112 extends along an outer profile of the stop lens portion 96 (an upper end portion and both end portions in the left-and-right direction of the stop lens portion 96). In other words, the projecting portion 112 extends over an entire length of an upper end portion of the stop lens portion 96, and has both end portions thereof in the left-and-right direction extending along end portions of inner sides of the respective side lower cover portions 108L, 108R in the left-and-right direction. A distal end of the projecting portion 112 is positioned in front of a rear end of the first inclined portion 98 (see Fig. 3).

The first tail lens portion 100 is positioned above the optical axis L2 of the first tail lamp light, and is brightened by being irradiated with the first tail lamp light. The second inclined portion 102 (a lower surface 102a of the second inclined portion 102) extends substantially parallel to the optical axis L2 of the first tail lamp light. With such a configuration, the stop lens portion 96 and the first tail lens portion 100 can be easily visually recognized from behind and above.

A recessed portion 114 is formed on an outer surface of a boundary portion between the first tail lens portion 100 and the second inclined portion 102. The recessed portion 114 extends over an entire length of the first tail lens portion 100 in the left-and-right direction. With such a configuration, the boundary between the first tail lens portion 100 and the second inclined portion 102 (an outer profile of the first tail lens portion 100) becomes clear and hence, visibility of the first tail lens portion 100 can be enhanced.

The second tail lens portion 104 is positioned above the optical axis L3 of the second tail lamp light, and is brightened by being irradiated with the second tail lamp light. A distance from the respective second tail lamp light sources 80 to the second tail lens portion 104 is substantially equal to a distance from the respective first tail lamp light sources 74 to the first tail lens portion 100. The upper cover portion 106 covers the second tail lamp printed circuit board 78 from above. A front end of the second inclined portion 102 is positioned behind the second tail lamp light sources 80. Accordingly, it is possible to effectively illuminate the second inclined portion even when an LED having higher directivity than a bulb is used as the second tail lamp light source 80.

As shown in Fig. 5 to Fig. 7, a light transmission suppressing portion 116 which suppresses the transmission of light is formed on a portion of such an inner lens 50. To facilitate the understanding of the configuration, the light transmission suppressing portion 116 is indicated by cross hatching in Fig. 5 to Fig. 7.

The light transmission suppressing portion 116 is formed by applying by coating a material which suppresses the transmission of light to at least one of an outer surface and an inner surface of the inner lens 50. However, the light transmission suppressing portion 116 may be formed by fixing a sheet member or a cover member which suppresses the transmission of light to at least one of the outer surface and the inner surface of the inner lens 50. Further, the light transmission suppressing portion 116 may be formed by forming a portion of the inner lens 50 by molding using a resin material capable of suppressing the transmission of light.

The light transmission suppressing portion 116 includes: a pair of left and right side light-transmission suppressing portions 118L, 118R formed on the respective side lens portions 90L, 90R; a lower light-transmission suppressing portion 120 formed on the lower cover portion 94; and a pair of inner light-transmission suppressing portions 122L, 122R disposed on both side portions of the second inclined portion 102 in the left-and-right direction.

The side light-transmission suppressing portion 118L is formed over the entire side lens portion 90L. That is, the side light-transmission suppressing portion 118L extends along the vertical direction of the side lens portion 90L (inner lens 50). To be more specific, the side light-transmission suppressing portion 118L is disposed between the center lens portion 92 (the first tail lens portion 100 and the second tail lens portion 104) and the blinker reflector 64L.

An upper end portion of the side light-transmission suppressing portion 118L is positioned above the blinker lamp light source 84L, and a lower end portion of the side light-transmission suppressing portion 118L is positioned below the blinker lamp light source 84L (see Fig. 7). The side light-transmission suppressing portion 118L is positioned behind the second tail lens portion 104. Since the side light-transmission suppressing portion 118R has substantially the same configuration as the side light-transmission suppressing portion 118L, the detailed explanation of the side light-transmission suppressing portion 118R is omitted.

The lower light-transmission suppressing portion 120 is formed over the entire lower cover portion 94 (the pair of side lower cover portions 108L, 108R and the center lower cover portion 110). With such a configuration, an outer profile of the stop lens portion 96 becomes clear and hence, visibility of the stop lens portion 96 can be enhanced.

The respective inner light-transmission suppressing portions 122L, 122R extend toward an inner side in the left-and-right direction from a center portion of the side light-transmission suppressing portions 118L, 118R in the vertical direction. That is, the respective inner light-transmission suppressing portions 122L, 122R extend toward the inside in the left-and-right direction from portions of the respective side light-transmission suppressing portions 118L, 118R disposed close to the blinker lamp portions 46L, 46R in the left-and-right direction. In other words, the respective inner light-transmission suppressing portions 122L, 122R are, in Fig. 7, positioned between an end portion of the first tail lamp printed circuit board 72 and an end portion of the second tail lamp printed circuit board 78.

As shown in Fig. 2, Fig. 3 and Fig. 6, the outer lens 52 is a colorless transparent cover member which integrally covers the inner lens 50 and the pair of blinker lamp light sources 84L, 84R, and is mounted on the housing 38. An outer edge portion of the outer lens 52 is mounted on an outer edge portion of the housing 38 by way of a sealing member 124. With such a configuration, the intrusion of water into the inside of the outer lens 52 can be prevented. The outer lens 52 extends upward toward the rear of the vehicle.

According to this embodiment, the optical axis L2 of the first tail lamp light is inclined upward toward the rear of the vehicle with respect to the optical axis L1 of the stop lamp light, and the lower surface 98a of the first inclined portion 98 extends substantially parallel to the optical axis L2 of the first tail lamp light. Accordingly, the stop lens portion 96 can be easily visually recognized from the rear of and above the vehicle.

Accordingly, even when the stop lens portion 96 is positioned vehicle forward of and below the first tail lens portion 100, it is possible to ensure visibility of the first tail lamp light (tail lamp light) and the visibility of the stop lamp light simultaneously from the rear of and above the vehicle.

Further, the first tail lamp portion 42 is disposed vehicle forward of the front end of the lower surface 98a of the first inclined portion 98 and hence, the lower surface 98a of the first inclined portion 98 can be effectively illuminated by the first tail lamp light from the first tail lamp portion 42.

In this embodiment, the tail lamp portion 41 includes the first tail lamp portion 42 which emits the first tail lamp light, and the second tail lamp portion 44 which emits the second tail lamp light. Accordingly, the visibility of the tail lamp lights (the first tail lamp light and the second tail lamp light) can be efficiently increased. Further, the second tail lens portion 104 is positioned vehicle rear of and above the first tail lens portion 100 and hence, the manner that the first tail lamp light is viewed and the manner that the second tail lamp light is viewed can be made different from each other. Accordingly, design property of the vehicle-use rear combination lamp can be enhanced.

In this embodiment, the optical axis L2 of the first tail lamp light and the optical axis L3 of the second tail lamp light are substantially parallel to each other and hence, the visibility of the tail lamp light can be effectively increased.

In this embodiment, the vehicle-use rear combination lamp 10 includes the outer lens 52 mounted on the housing 38 in a state where the outer lens 52 covers the inner lens 50 and hence, design property of the rear combination lamp 10 can be enhanced.

Further, the lower surface 34a of the carrier 34 disposed above the rear combination lamp 10 is inclined upward toward the rear of the vehicle. Accordingly, it is possible to ensure the visibility of the rear combination lamp 10 from the rear of and above the vehicle.

According to this embodiment, the tail lamp portion 41 and the pair of blinker lamp portions 46L, 46R are mounted on the common housing 38 and hence, the rear combination lamp 10 can be provided as an integral body and in a compact shape. Further, the side light-transmission suppressing portions 118L, 118R are formed on the inner lens 50 and hence, visibility of the tail lamp light and the visibility of the respective blinker lamp lights which are independent from each other can be ensured.

Further, the respective side light-transmission suppressing portions 118L, 118R extend over the entire length of the side lens portions 90L, 90R in the vertical direction and hence, visibility of the tail lamp light and the visibility of the blinker lamp lights which are independent from each other can be effectively ensured.

Upper end portions of the respective side light-transmission suppressing portions 118L, 118R are positioned above the respective blinker lamp light sources 84L, 84R, and lower end portions of the respective side light-transmission suppressing portions 118L, 118R are positioned below the respective blinker lamp light sources 84L, 84R. Accordingly, visibility of the tail lamp light and the visibility of the respective blinker lamp lights which are independent from each other can be ensured more effectively.

The respective side light-transmission suppressing portions 118L, 118R are positioned vehicle rear of the first tail lens portion 100 and the second tail lens portion 104. Accordingly, visibility of the tail lamp light and the visibility of the respective blinker lamp lights which are independent from each other can be ensured further effectively.

In this embodiment, the side light-transmission suppressing portions 118L, 118R are disposed between the center lens portion 92 (the first tail lens portion 100 and the second tail lens portion 104) and the respective blinker reflectors 64L, 64R. Accordingly, visibility of the tail lamp light and the visibility of the respective blinker lamp lights which are independent from each other can be ensured further effectively.

The respective inner light-transmission suppressing portions 122L, 122R extend toward the inside in the left-and-right direction from portions of the respective side light-transmission suppressing portions 118L, 118R disposed close to the blinker lamp portions 46L, 46R in the left-and-right direction. Accordingly, visibility of the tail lamp light and the visibility of the respective blinker lamp lights which are independent from each other can be ensured further effectively.

The pair of side lens portions 90L, 90R provided with the side light-transmission suppressing portions 118L, 118R are disposed on both left and right sides of the center lens portion 92 and hence, design property of the rear combination lamp 10 can be enhanced.

This embodiment is not limited to the above-mentioned configuration. In this embodiment, the pair of blinker lamp portions 46L, 46R are disposed in the common housing 38. However, the pair of blinker lamp portions 46L, 46R may be provided as a body separate from the rear combination lamp 10. In this case, the outer lens 52 may be omitted. In this embodiment, the second tail lamp portion 44 may be omitted.

It is needless to say that the vehicle-use rear combination lamp and the vehicle according to the present invention are not limited to the above-mentioned embodiment, and can adopt various configurations without departing from the scope of the present invention, which is defined in appended claims.

An explanation of the reference signs used in the drawings is provided below.

10: rear combination lamp (vehicle-use rear combination lamp)
11: motorcycle (vehicle)
38: housing
41: tail lamp portion
42: first tail lamp portion
44: second tail lamp portion
46L, 46R: blinker lamp portion
50: inner lens
52: outer lens
64L, 64R: blinker reflector
84L, 84R: blinker lamp light source
90L, 90R: side lens portion
92: center lens portion
100: first tail lens portion
104: second tail lens portion
116: light transmission suppressing portion
118L, 118R: side light-transmission suppressing portion
120: lower light-transmission suppressing portion
122L, 122R: inner light-transmission suppressing portion

## Claims

1. A vehicle-use rear combination lamp (10) comprising:
a tail lamp portion (41);
a pair of blinker lamp portions (46L, 46R) disposed on both left and right sides of the tail lamp portion (41);
a common housing (38) on which the tail lamp portion (41) and the pair of blinker lamp portions (46L, 46R) are mounted;
an inner lens (50) which covers the tail lamp portion (41); and
an outer lens (52) which integrally covers the inner lens (50) and the pair of blinker lamp portions (46L, 46R); wherein the inner lens (50) includes a tail lens portion (100, 104) to which tail lamp light from the tail lamp portion (41) is irradiated, wherein
a light transmission suppressing portion (116) which suppresses transmission of light is provided, **characterised in that**
the light transmission suppressing portion (116) is formed on a portion of the inner lens (50),
the light transmission suppressing portion (116) includes a pair of side light-transmission suppressing portions (118L, 118R) positioned on both left and right side portions of the inner lens (50) respectively, to ensure the clear distinction between the visibility of tail lamp light from the tail lamp portion (41) and the visibility of blinker lamps lights from the respective blinker lamp portions (46L,46R), and wherein
the respective side light-transmission suppressing portions (118L, 118R) are positioned vehicle rearward of the tail lens portion (100, 104), when the vehicle-use rear combination lamp (10) is installed to the vehicle.

2. The vehicle-use rear combination lamp (10) according to claim 1, wherein the respective side light-transmission suppressing portions (118L, 118R) extend in a vertical direction of the inner lens (50).

3. The vehicle-use rear combination lamp (10) according to claim 2, wherein upper end portions of the respective side light-transmission suppressing portions (118L, 118R) are positioned above the respective blinker lamp portions (46L, 46R), and
lower end portions of the respective side light-transmission suppressing portions (118L, 118R) are positioned below the respective blinker lamp portions (46L, 46R).

4. The vehicle-use rear combination lamp (10) according to any one of claims 1 to 3, wherein a pair of blinker reflectors (64L, 64R) which reflects blinker lamp light from the respective blinker lamp portions (46L, 46R) is provided to the housing (38), and
the respective side light-transmission suppressing portions (118L, 118R) are disposed between the tail lens portion (100, 104) and the respective blinker reflectors (64L, 64R).

5. The vehicle-use rear combination lamp (10) according to any one of claims 1 to 4, wherein the light transmission suppressing portion (116) includes a pair of inner light-transmission suppressing portions (122L, 122R) which extends inward in a left-and-right direction from portions of the respective side light-transmission suppressing portions (118L, 118R) disposed close to the blinker lamp portions (46L. 46R) in the left-and-right direction.

6. The vehicle-use rear combination lamp (10) according to any one of claims 1 to 5, wherein the inner lens (50) includes a pair of side lens portions (90L, 90R) which is disposed on both left and right sides of the tail lens portion (100, 104) and projects vehicle rearward from the tail lens portion (100, 104), and
the side light-transmission suppressing portions (118L, 118R) are provided to the respective side lens portions (90L, 90R).

7. A vehicle (11) equipped with the vehicle-use rear combination lamp (10) according to any one of claims 1 to 6.

## Patentansprüche

1. Heckkombinationsleuchte zur Verwendung in einem Fahrzeug (10), umfassend:
einen Rückleuchtenabschnitt (41);
ein Paar Blinkerleuchtenabschnitte (46L, 46R), die sowohl auf einer linken als auch rechten Seite des Rückleuchtenabschnitts (41) angeordnet sind;
ein gemeinsames Gehäuse (38), auf dem der Rückleuchtenabschnitt (41) und das Paar Blinkerleuchtenabschnitte (46L, 46R) befestigt sind;
eine innere Linse (50), die den Rückleuchtenabschnitt (41) abdeckt; und
eine äußere Linse (52), die die innere Linse (50) und das Paar Blinkerleuchtenabschnitte (46L, 46R) vollständig abdeckt; wobei die innere Linse (50) einen Rücklinsenabschnitt (100, 104) einschließt, an den Rückleuchtenlicht von dem Rückleuchtenabschitt (41) ausgestrahlt wird, wobei
ein Lichtdurchlässigkeitsunterdrückungsabschnitt (116) bereitgestellt ist, der eine Durchlässigkeit von Licht unterdrückt, **dadurch gekennzeichnet, dass** der Lichtdurchlässigkeitsunterdrückungsabschnitt (116) auf einem Abschnitt der inneren Linse (50) gebildet ist,
der Lichtdurchlässigkeitsunterdrückungsabschnitt (116) ein Paar seitliche Lichtdurchlässigkeitsunterdrückungsabschnitte (118L, 118R) einschließt, jeweils sowohl auf einem linken als auch rechten seitlichen Abschnitt der inneren Linse (50) positioniert, um die klare Unterscheidung zwischen der Sichtbarkeit von Rückleuchtenlicht von dem Rückleuchtenabschnitt (41) und der Sichtbarkeit von Blinkerleuchtenlichtern von den jeweiligen Blinkerleuchtenabschnitten (46L, 46R) zu gewährleisten, und wobei
die jeweiligen seitlichen Lichtdurchlässigkeitsunterdrückungsabschnitte (118L, 118R) Fahrzeug heckwärtig des Rücklinsenabschnitts (100, 104) positioniert sind, wenn die Heckkombinationsleuchte zur Verwendung in einem Fahrzeug (10) an dem Fahrzeug angebracht ist.

2. Heckkombinationsleuchte zur Verwendung in einem Fahrzeug (10) nach Anspruch 1, wobei die jeweiligen seitlichen Lichtdurchlässigkeitsunterdrückungsabschnitte (118L, 118R) sich in einer vertikalen Richtung der inneren Linse (50) erstrecken.

3. Heckkombinationsleuchte zur Verwendung in einem Fahrzeug (10) nach Anspruch 2, wobei obere Endabschnitte der jeweiligen seitlichen Lichtdurchlässigkeitsunterdrückungsabschnitte (118L, 118R) oberhalb der jeweiligen Blinkerleuchtenabschnitte (46L, 46R) positioniert sind, und
untere Endabschnitte der jeweiligen seitlichen Lichtdurchlässigkeitsunterdrückungsabschnitte (118L, 118R) unterhalb der jeweiligen Blinkerleuchtenabschnitte (46L, 46R) positioniert sind.

4. Heckkombinationsleuchte zur Verwendung in einem Fahrzeug (10) nach einem der Ansprüche 1 bis 3, wobei ein Paar Blinkerreflektoren (64L, 64R), das Blinkerleuchtenlicht von den jeweiligen Blinkerleuchtenabschnitten (46L, 46R) reflektiert, an dem Gehäuse (38) bereitgestellt ist, und
die jeweiligen seitlichen Lichtdurchlässigkeitsunterdrückungsabschnitte (118L, 118R) zwischen dem Rücklinsenabschnitt (100, 104) und den jeweiligen Blinkerreflektoren (64L, 64R) angeordnet sind.

5. Heckkombinationsleuchte zur Verwendung in einem Fahrzeug (10) nach einem der Ansprüche 1 bis 4, wobei der Lichtdurchlässigkeitsunterdrückungsabschnitt (116) ein Paar innerer Lichtdurchlässigkeitsunterdrückungsabschnitte (122L, 122R) einschließt, das sich nach innen in einer Links-und-Rechts-Richtung von Abschnitten der jeweiligen seitlichen Lichtdurchlässigkeitsunterdrückungsabschnitte (118L, 118R) erstreckt, angeordnet in der Nähe der Blinkerleuchtenabschnitte (46L, 46R) in der Links-und-Rechts-Richtung.

6. Heckkombinationsleuchte zur Verwendung in einem Fahrzeug (10) nach einem der Ansprüche 1 bis 5, wobei die innere Linse (50) ein Paar seitlicher Linsenabschnitte (90L, 90R) einschließt, das sowohl auf einer linken als auch rechten Seite des Rücklinsenabschnitts (100, 104) angeordnet ist und Fahrzeug heckwärtig von dem Rücklinsenabschnitt (100, 104) hervorragt, und
die seitlichen Lichtdurchlässigkeitsunterdrückungsabschnitte (118L, 118R) an den jeweiligen seitlichen Linsenabschnitten (90L, 90R) bereitgestellt sind.

7. Fahrzeug (11), das mit der Heckkombinationsleuchte zur Verwendung in einem Fahrzeug (10) nach einem der Ansprüche 1 bis 6 ausgerüstet ist.

## Revendications

1. Feu arrière combiné (10) destiné à être utilisé dans un véhicule comprenant :
une partie de feu arrière (41) ;
une paire de parties de feux clignotants (46L, 46R) disposées à la fois sur les côtés gauche et droit de la partie de feu arrière (41) ;
un boîtier commun (38) sur lequel la partie de feu arrière (41) et la paire de parties de feux clignotants (46L, 46R) sont montées ;
une lentille interne (50) qui recouvre la partie de feu arrière (41) ; et
une lentille externe (52) qui recouvre intégralement la lentille interne (50) et la paire de parties de feux clignotants (46L, 46R) ; dans lequel la lentille interne (50) comprend une partie de lentille arrière (100, 104) sur laquelle la lumière de feu arrière issue de la partie de feu arrière (41) est irradiée, dans lequel
une partie de suppression de transmission de lumière (116) est prévue, qui supprime une transmission de lumière, **caractérisé en ce que** la partie de suppression de transmission de lumière (116) est formée sur une partie de la lentille interne (50),
la partie de suppression de transmission de lumière (116) comprend une paire de parties de suppression de transmission de lumière latérales (118L, 118R) positionnées à la fois sur les parties latérales gauche et droite de la lentille interne (50), respectivement pour assurer une nette distinction entre la visibilité de la lumière de feu arrière issue de la partie de feu arrière (41) et la visibilité des lumières de feux clignotants issue des parties de feux clignotants respectives (46L, 46R), et dans lequel
les parties de suppression de transmission de lumière latérales respectives (118L, 118R) sont positionnées sur le véhicule vers l'arrière de la partie de lentille arrière (100, 104) lorsque le feu arrière combiné (10) destiné à être utilisé dans un véhicule est installé sur le véhicule.

2. Feu arrière combiné (10) destiné à être utilisé dans un véhicule selon la revendication 1, dans lequel les parties de suppression de transmission de lumière latérales respectives (118L, 118R) s'étendent dans la direction verticale de la lentille interne (50).

3. Feu arrière combiné (10) destiné à être utilisé un véhicule selon la revendication 2, dans lequel des parties d'extrémité supérieures des parties de suppression de transmission de lumière latérales respectives (118L, 118R) sont positionnées au-dessus des parties de feux clignotants respectives (46L, 46R), et
des parties d'extrémité inférieure des parties de suppression de transmission de lumière latérales respectives (118L, 118R) sont positionnées en dessous des parties de feux clignotants respectives (46L, 46R).

4. Feu arrière combiné (10) destiné à être utilisé dans un véhicule selon l'une quelconque des revendications 1 à 3, dans lequel une paire de réflecteurs de clignotants (64L, 64R) qui réfléchissent la lumière des feux clignotants issues des parties de feux clignotants respectives (46L, 46R) est disposée sur le boîtier (38), et
les parties de suppression de transmission de lumière latérales respectives (118L, 118R) sont disposées entre la partie de lentille arrière (100, 104) et les réflecteurs de clignotants respectifs (64L, 64R).

5. Feu arrière combiné (10) destiné à être utilisé dans un véhicule selon l'une quelconque des revendications 1 à 4, dans lequel la partie de suppression de transmission de lumière (116) comprend une paire de parties de suppression de transmission de lumière internes (122L, 122R) qui s'étend vers l'intérieur dans une direction gauche-droite depuis des parties des parties de suppression de transmission de lumière latérales respectives (118L, 118R) disposées à proximité des parties de feux clignotants (46L, 46R) dans la direction gauche-droite.

6. Feu arrière combiné (10) destiné à être utilisé dans un véhicule selon l'une quelconque des revendications 1 à 5, dans lequel la lentille interne (50) comprend une paire de parties de lentille latérales (90L, 90R) qui est disposée à la fois sur les côtés gauche et droit de la partie de lentille arrière (100, 104) et fait saillie du véhicule vers l'arrière à partir de la partie de lentille arrière (100, 104), et
les parties de suppression de transmission de lumière latérales (118L, 118R) sont disposées sur les parties de lentille latérales respectives (90L, 90R).

7. Véhicule (11) équipé du feu arrière combiné (10) destiné à être utilisé dans un véhicule selon l'une quelconque des revendications 1 à 6.
